(19) Europäisches Patentamt
European Patent Office
Office européen des brevets

(11) **EP 2 777 837 B1**

(12) **EUROPEAN PATENT SPECIFICATION**

(45) Date of publication and mention
of the grant of the patent:
**30.05.2018   Bulletin 2018/22**

(51) Int Cl.:
***B21C 23/00*** *(2006.01)*   ***B22F 3/20*** *(2006.01)*

(21) Application number: **14160001.5**

(22) Date of filing: **14.03.2014**

(54) **System for and method of plastic zone extrusion**

System und Verfahren zur plastischen Extrusion

Système et methode d'extrusion en zone plastique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2013   US 201313832255**

(43) Date of publication of application:
**17.09.2014   Bulletin 2014/38**

(73) Proprietors:
• **Southwire Company, LLC
Carrollton, GA 30119-4400 (US)**
• **UT-Battelle, LLC
Oak Ridge, TN 37831-6258 (US)**

(72) Inventors:
• **Manchiraju, Venkata Kiran
Villa Rica, GA Georgia 30180 (US)**

• **Feng, Zhili
Knoxville, TN Tennessee 37934 (US)**
• **David, Stan A.
Knoxville, TN Tennessee 37922-6388 (US)**
• **Yu, Zhenzhen
Knoxville, TN Tennessee 37932 (US)**

(74) Representative: **Ström & Gulliksson AB**
**P.O. Box 4188**
**203 13 Malmö (SE)**

(56) References cited:
EP-A2- 0 363 667       EP-A2- 1 321 199
WO-A1-2008/063076     DE-B3-102005 052 470
GB-A- 2 083 770        GB-A- 2 364 946
US-A- 4 041 595        US-A- 5 015 438
US-A- 5 284 428

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Extrusion is a process used to create objects of a fixed cross-sectional profile. A material is pushed or drawn through a die of a desired cross-section. Because a material only encounters compressive and shear stresses, extrusion provides the ability to create objects having complex cross-sections. Some known extrusion systems are disclosed in US-5,284,428, GB-2 083 770 and EP-0 363 667.

SUMMARY

This Summary is provided to introduce a selection of concepts in a simplified form that are further described below in the Detailed Description. This Summary is not intended to identify key features or essential features of the claimed subject matter. Nor is this Summary intended to be used to limit the claimed subject matter's scope.

Plastic zone extrusion is provided. First, a compressor comprises a chamber and a plunger, wherein the plunger is configured to rotate in the chamber to generate frictional heat in stock to place the stock in a plastic zone of the stock, and to mix the stock. Then, a conveyer receives the stock in its plastic zone from the compressor and transports the stock in its plastic zone from the compressor. Next, a die receives the stock in its plastic zone from the conveyer and extrudes the stock to form a wire.

Both the foregoing general description and the following detailed description provide examples and are explanatory only. Accordingly, the foregoing general description and the following detailed description should not be considered to be restrictive. Further, features or variations may be provided in addition to those set forth herein. For example, embodiments may be directed to various feature combinations and sub-combinations described in the detailed description.

BRIEF DESCRIPTION OF THE DRAWINGS

The accompanying drawings, which are incorporated in and constitute a part of this disclosure, illustrate various embodiments of the claimed invention, as well as related embodiments which are not part of the claimed invention. In the drawings:

FIG. 1 shows an extrusion system;
FIG. 2 shows a friction extrusion system;
FIG. 3 shows a wire produced from machining chips;
FIG. 4 shows a dispersed discontinuous SiC particulate in aluminum 2618 alloy matrix;
FIG. 5 show a friction stir process;
FIG. 6 shows a cross-section view of FSP zone;
FIG. 7 shows a uniform dispersion of nano $Al_2O_3$ particles in a pure Al matrix by FSP;
FIG. 8 shows stages involved in making comparable final products from recyclable scraps for embodiments of the invention and the current technology involving melting, casting and rolling/extrusion;
FIG. 9 shows an example of final products manufactured via extrusion processes consistent with embodiments of the invention;
FIG. 10 shows energy consumption for producing one million metric tons of products;
FIG. 11 shows a plastic zone extrusion system;
FIG. 12 shows a plastic zone extrusion system;
FIG. 13 shows a cross-section of wire produced by the plastic zone extrusion system;
FIG. 14 shows a cross-section of wire produced by the plastic zone extrusion system; and
FIG. 15 shows a slug.

DETAILED DESCRIPTION

The following detailed description refers to the accompanying drawings. Wherever possible, the same reference numbers are used in the drawings and the following description to refer to the same or similar elements. While embodiments of the invention may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the invention.

For the U.S. domestic metal producers (steels, Al alloys, Ti alloys, for example), recycling scraped materials is of prominent importance for a number of reasons. First, there are great concerns on the environmental issues related to disposing the scraped metals as industrial wastes. There is also an issue of diminishing domestic natural mineral resources, in contrast to the abundance and continuing pileups of scraped metals produced over the years of industrialization. The primary driver may be in the economics. It may be far cheaper, faster, and more energy-efficient to recycle than to manufacture from ores. In addition, capital equipment costs may be low for recycling. For example, recycling aluminum may require only about 10% of the capital equipment costs of these for production from ore. Mini steel mills with EAF furnaces that mainly use scraps as feedstock may also be less expensive to construct than the large BOF based integrated mills.

The U.S. Department of Energy's Industrial Technology Program (ITP) conducted a series of studies looking into the energy consumptions in the most energy-intensive industry sectors. For both steel industry and aluminum industry - the two largest metal making industries in the U.S. - converting scraps into usable products have become the major source of production.

Since the 1960's, recycling aluminum scraps in the U.S. has steadily grown, both in terms of the tonnage, and the percentage of total production. In 2000, nearly half (48.5%) of the aluminum metal produced in the U.S. was from recycled material. Similar trend exists in steelmaking. Steel has become the most recycled material, with two-third of U.S. steel now produced from scrap. Over ten million cars are shredded annually and the shredder scrap from these cars is returned to the melt shops.

Melting the feedstock may be a major energy efficiency barrier in metal recycling. In general, melting and melt processing operations may be the most energy intense of all post-smelting processes. Thermal energy may be used to heat the scrap from ambient temperature to well above the melting point. A considerable portion of the thermal energy may be consumed to overcome the latent heat of fusion associated with melting. The thermal efficiency of today's melting process may be also low. For steel, the best-practice energy usage of EAF steelmaking using 100 % scrap charge is about 6.7 MBtu/cast ton, about five times of the theoretical minimum energy. For aluminum, the ratio is 2.50 kWh/kg to 0.33 kWh/kg - the actual usage is about 7.6 times of the theoretical minimum value.

Recycling of scrap materials has become a major source and will play an even more important role in future production and manufacturing of industrial metals in the U.S. The shift to a recycling dominant metal-making market represents a fundamental change in the feedstock materials in the US. This shift also presents a window-of-opportunity to re-think how metals should be produced from recyclables with even greater energy efficiency, environmental benefits, and product quality.

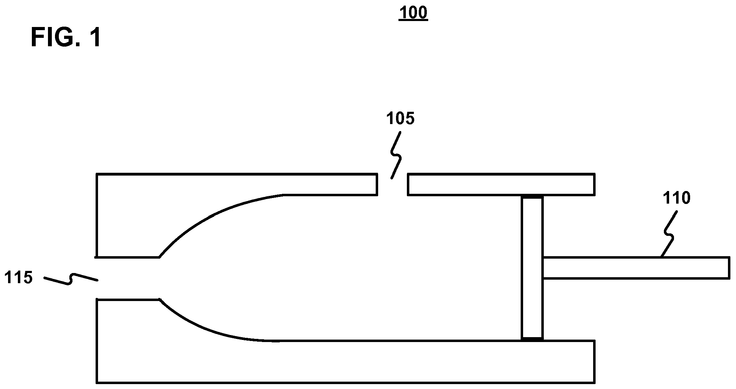

FIG. 1 shows a plastic zone extrusion system 100 consistent with a related embodiment, not part of the claimed invention, for providing plastic zone extrusion. As shown in FIG. 1, plastic zone extrusion system 100 may include an inlet 105, a plunger 110, and an orifice 115. Stock may be placed in inlet 105. Once plastic zone extrusion system 100 receives the stock, plunger 110 may compress the stock and force (e.g., extrude) the stock through orifice 115 in the form of a wire. For example, plunger 110 may turn the stock thus generating frictional heat. The generated frictional heat may heat the stock to a "plastic zone" of the stock. The plastic zone may comprise a solid state in which the stock is malleable, but not hot enough to be in a liquid or molten state. In other words, plastic zone extrusion system 100 may include a rotating die configured to generate heat by rotating the stock within plastic zone extrusion system 100. Once the generated heat places the stock in the stock's plastic zone, the stock may be extruded out orifice 115. The process may be continuously repeated by continuously adding stock into inlet 105 and continuously extruding wire out orifice 115 to construct a wire of any length.

The stock may comprise any material that may be placed in the stock's plastic zone by plastic zone extrusion system 100. For example, the stock may comprise aluminum, copper, or a combination. The stock, for example, may comprise shavings or swarf. Swarf may comprise metal shavings or chippings, for example, debris or waste resulting from metalworking operations. Swarf may be recycled, for example, due to the environmental concerns regarding potential contamination with liquids such as cutting fluid or tramp oil. These liquids may be separated from the metal using a centrifuge, thus allowing both to be reclaimed and prepared for further treatment.

Moreover, consistent with embodiments of the invention, the stock may comprise one metal, a plurality of any metals, or a combination of a metal or metals with another non-metal substance or substances. For example, the stock may comprise both copper and aluminum. With conventional systems, there may be a limit to the amount of molten copper that can mix homogeneously with molten aluminum. Consistent with embodiments of the present invention, the stock may include copper and aluminum in any percentage. Consequently, a wire may be constructed balancing aluminum's strength and light weigh with copper's conductivity. In other words, copper may be added to aluminum stock to increase the stocks conductivity.

The stock may also comprise any recycled or recyclable substance such as shredded aluminum cans. With conventional systems, recycled material, such as aluminum cans, must go through a "de-lacquering" process to remove substances from the recycled material. Consistent with embodiments of the invention, wire may be constructed using shredded aluminum cans that have not been de-lacquered thus avoiding costs associated with de-lacquering. While such wire may not have as high conductivity as stock that has been de-lacquered, this wire may be used in situations in which this is not an issue (e.g. fence wire).

Furthermore, consistent with embodiments of the invention, nano-particles may be added to the stock. For example, nano-particles of aluminum oxide may be added to aluminum stock to increase strength and conductivity of wire made with this stock. Notwithstanding, added nano-particles may add to the strength, conductivity, thermal expansion, or any physical or chemical property of wire made from stock with nano-particles added. With conventional systems, because material used to make wire has to be heated at least until it melts, any nano-particles added in conventional systems my not be stable (e.g. may lose their desired properties) at the temperature of molten metals.

A highly energy-efficient solid-state material synthesis process - a direct solid-state metal conversion (DSSMC) technology may be provided. Specifically, nano-particle dispersion strengthened bulk materials may be provided. Nano-composite materials from powders, chips, or other recyclable feedstock metals or scraps through mechanical alloying and thermo-mechanical processing may be provided in a single-step. Producing nano-engineered bulk materials with unique functional properties (e.g. thermal or electrical) may also be provided. Nano-engineered wires may be used in long-distance electric power delivery infrastructure.

Embodiments of the present invention may comprise a DSSMC system and method. These systems and methods may eliminate the need of melting (the most energy extensive step) during scrap-to-metal conversion/recycling process, thereby reducing the energy consumption and the cost of the metal making. Furthermore, since melting and solidification may be avoided, embodiments of the invention may open new pathways toward producing new classes of materials such as nano-engineered structural and functional materials by using, for example, mechanical alloying and processing. Embodiments of the present invention may use friction extrusion of metal recycling and friction stir processing of nano-particle strengthened surfaces.

Friction extrusion

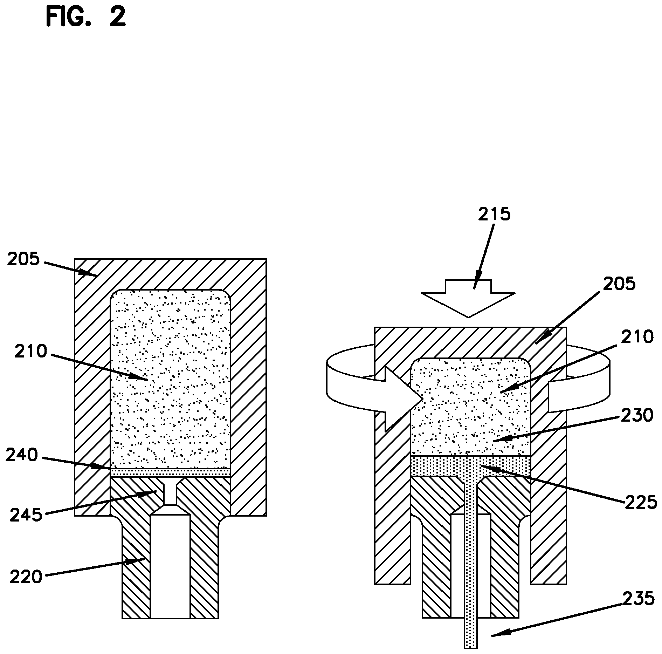

Friction extrusion may be a direct solid-state metal conversion process. Friction extrusion is shown in FIG. 2. A rotating chamber 205 filled with swarf 210 (e.g., machining chips or metallic powder) may be applied under axial load 215 onto a plunger 220 and extruded. Located between plunger 220 and swarf 210 may be a fusible plug 240. In addition, plunger 220 may include an orifice or die 245. The frictional heat and pressure caused by the relative motion and the initial restriction in the axial extrusion flow allow a plasticized layer 225 to form without the need for an external heat source. Considerable heat is generated by the high-strain rate plastic deformation in this layer that softens the material for mixing and consolidation. A relatively localized heat affected transition zone 230 may separate the plasticized layer from the compressed swaft 210 that may remain stagnant within chamber 205. With continued generation of plasticized layer 225 and progressive consumption of the swarf 210, a solid rod 235 may be hydrostatically extruded through die 245. From the energy consumption point of view, because considerable temperature rise may be restricted to thin plasticized layer 225, heat loss to the environment may be considerably lower than the heat loss of a heating furnace.

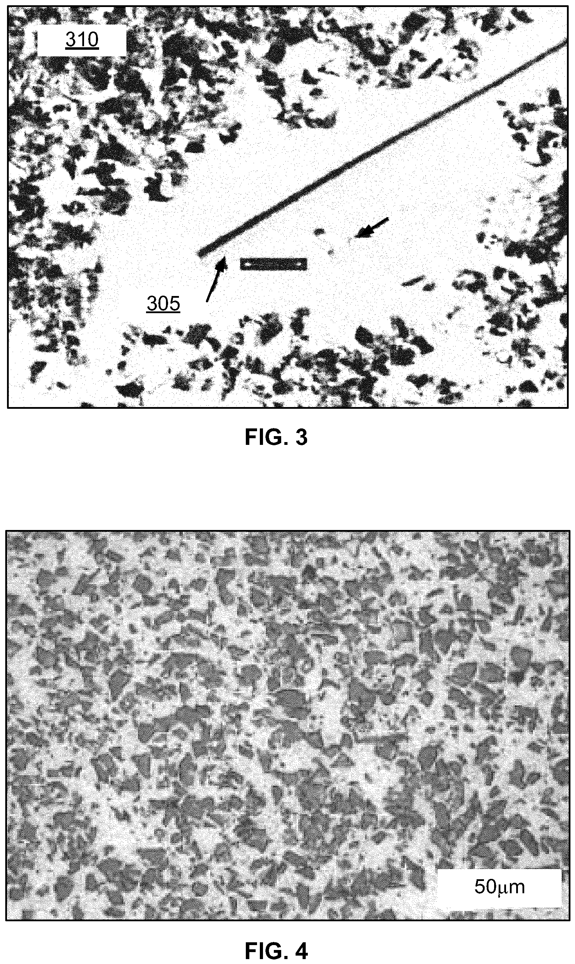

As shown in FIG. 3, a solid Al-Mg alloy wire 305 of over 3 mm in diameter and several meters long may be produced from, for example, machining chips 310. Good mechanical properties and greater than 99.8% densification (as measurement by density) may be achieved. Simple hand bend tests through 180° and tensile tests may demonstrate the integrity of the finished rod. Tensile test may achieve 130 MPa.

Consistent with embodiments of the invention, the extensive thermo-mechanical deformation may be to produce mechanically alloyed materials. Aluminum powder 2618 and 40% micron-sized silicon carbides may be used as the feedstock. Consistent with embodiments of the invention, most processed materials may be produced with reasonable appearance, consequently at least partial consolidation and conversion of the feedstock materials may be achieved. FIG. 4 shows the longitudinal section of a metal matrix composite bar made in trial runs. The dispersed discontinuous SiC particulates may be uniformly distributed in the aluminum 2618 alloy matrix.

Consistent with embodiments of the invention, the product from the friction extrusion may be a round wire/bar. However, other forms or shapes of products could be made through use of different die and plunger designs. Also, there may be no barrier limiting the size of the final products, if the process consistent with embodiments of the invention is scale up, for example, through additional hot extrusion/forming/rolling of the billet produced from multiple friction extrusion stations.

Friction Stir Processing

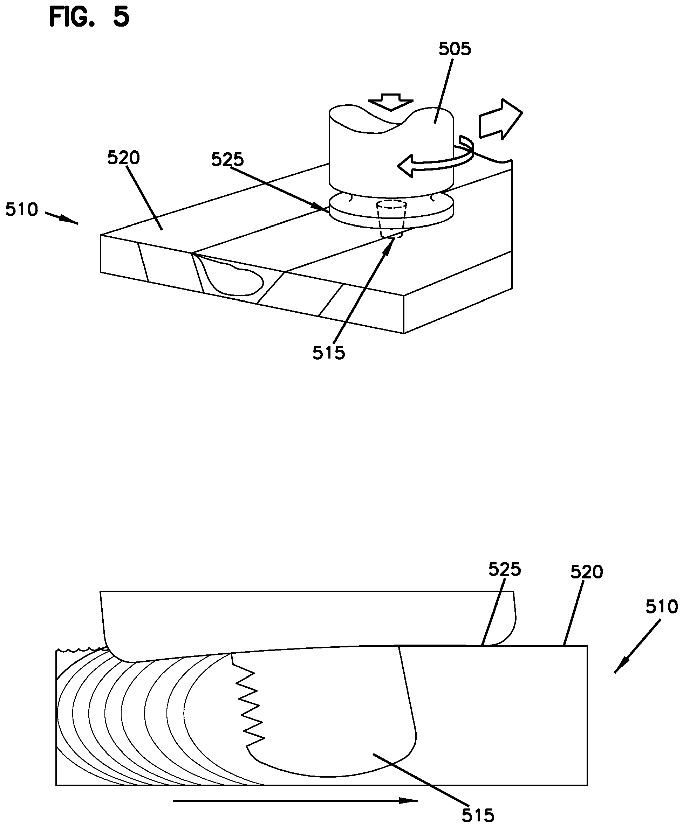

Consistent with embodiments of the invention, friction stir processing (FSP) may incorporate nano-sized oxide particles into Al matrix to form a mechanically alloyed hard and strong nanocomposite surface layer. FSP may comprise a variant of friction stir welding. In FSP (e.g., FIG. 5), a rotating tool 505 may be pushed against a workpiece 510 being processed such that a pin 515 of rotating tool 505 is buried in workpiece 510 and tool shoulder 525 is in full contact with a surface 520 of the workpiece. During processing, the temperature in a column of workpiece material under a tool shoulder 525 may be increased substantially, but below the melting point of the material, largely due to the frictional heating and high-strain rate deformation at the interface of the rotating tool 505 and workpiece 510. The increase in temperature may soften the material and allow the rotating tool 505 to mechanically stir the softened material toward the backside of pin 515 for consolidation and mechanical alloying. The high straining rate and the extensive material flow/deformation of FSP, which are not easily achievable in other thermo-mechanical deformation processes, may result in microstructures with unique or drastically improved properties.

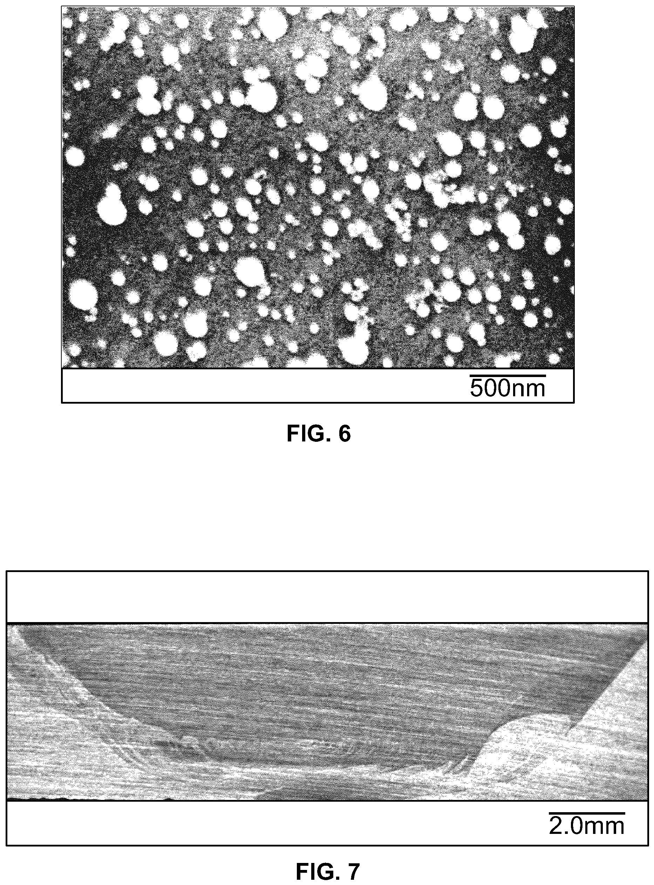

Consistent with embodiments of the invention, up to 20% volume fraction of nano-sized $Al_2O_3$ particles may be uniformly dispersed and mechanically alloyed with the Al matrix to form a nano-composite material with greatly increased strength. The Al-$Al_2O_3$ nano-composite may have over an order of magnitude higher compressive strength than that of baseline comparison metal. The wear resistance may be several orders of magnitude higher. FIG. 6 shows the cross-section of the friction stir processed Al-$Al_2O_3$ nano-composite surface layer, and the resulting uniform distribution of the nano oxide particles. FSP may have a surface modification technology not intended for bulk nano-material production. Consistent with embodiments of the invention, a high volume fraction of nano particles may be uniformly incorporated into bulk metal matrix by extensive thermo-mechanical deformation and mixing from friction stir action.

FIG. 7 shows a uniform dispersion of nano $Al_2O_3$ particles in pure Al matrix by FSP. The initial oxide particle size in FIG. 7 is approximately 50 nm.

Embodiments of the invention may provide a direct solid-state metal conversion process that includes: (1) metal recycling with greatly improved energy efficiency; and (2) synthesis of nano-engineered bulk materials with enhanced mechanical strength and other unique functional properties.

DSSMC consistent with embodiments of the invention may provide high energy efficiency including an over 80% energy reductions in DSSMC over conventional metal conversion/synthesis processes that involve metal melting. Actual energy savings in production could be even higher, due to, for example, the energy efficiency of the mechanical system over the thermal/melting system. DSSMC may be environmentally friendly due to recycling scraps and low energy consumption.

Since melting and solidification may be eliminated, DSSMC may be suitable for synthesis of high-performance structural materials and functional materials that relies on mechanical alloying principles. DSSMC may produce lightweight metal matrix composites for transportation systems, nano-engineered (nano-composite, and/or nano-crystalline) bulk materials for electricity infrastructure, and oxide dispersion strengthened (ODS) alloys for nuclear energy systems. It may also be used in the low-cost Ti process, as well as Ti based composite materials such as TiAl intermetallics and/or SiC-reinforced Ti alloys.

DSSMC may be a continuous process that may be much easier to scale-up for high-volume production of bulk nano-engineered materials, in comparison with the powder metallurgic (PM) + hot isostatic pressing (HIP) and other mechanically alloying or nano material synthesis processes.

- DSSMC may not be limited to wires or rods. Other shapes may be produced with proper design of the die and related process conditions.
- DSSMC may be deployed as a metal recycling process with much lower energy consumption, operational cost and equipment cost.
- The relevance and significance of DSSMC as a bulk nano-material synthesis technology is discussed further below.

Consistent with embodiments of the invention, engineering materials strengthened with nano-sized oxides and other ceramic particulate dispersoids may have some unique properties. For the same volume fraction, nano-sized particles may be much more effective than micron-sized particles in strengthening the material due to reduced inter-particle spacing and the Orowan hardening effect. Because the oxides and ceramic particles may be thermally stable and insoluble in the matrix, dispersion strengthened materials may retain their strength up to temperatures near the matrix melting point. Further, dispersion strengthening may not have the same limitation of precipitation strengthening that requires high solubility of solute atoms at high temperatures and specific nano phase forming thermodynamics and kinetics. Therefore, dispersion strengthening may lessen the compositional restrictions in alloy design - an important aspect in metal recycling as it may ease the requirement for metal sorting.

Dispersion strengthened materials may be produced in small quantity through mechanical-alloying power-metallurgy route that may be involved in HIP and multi-step hot rolling and annealing. Examples may include oxide dispersion strengthened (ODS) ferrous and non-ferrous alloys intended for next generation nuclear reactors and ultra high-temperature boiler applications. However, the PM+HIP process may be highly energy intensive and very costly to scale-up. Nano ceramic dispersion particles may be added to cast Al alloys and Mg alloys with considerable improvement in mechanical properties, especially high-temperature creep strength.

Although casting can produce large quantity of bulk materials, achieving uniform dispersion of nano-sized particles in the molten metal and subsequent solidified metal matrix may be difficult. Due to the low density and the van der Waals force effect, the nano-sized oxide particles may tend to agglomerate and float to the surface during metal casting. Attempts to apply external energy field such as ultrasonic energy to breakdown the agglomerates and mix the nano-particles uniformly in the molten metal have been experimented in laboratory with limited success.

DSSMC consistent with embodiments of the invention may provide an approach to produce nano-engineered materials. Uniform dispersion may be provided with much higher volume fraction (up to 20%) of nano-particles in a metal matrix. Friction extrusion shares the same deformation and metallurgical bonding principles with FSP and other widely used friction based solid-state joining processes. They all may rely on frictional heating and extreme thermo-mechanical process deformation to stir, mix, mechanically alloy, and metallurgically consolidate and synthesize the material together. Friction extrusion may offer a practical means to produce bulk materials utilizing the principle of friction stir consolidation.

Embodiments of the invention may provide:

- Different shaped products.
- Nano-engineered bulk materials (solid wires) via DSSMC.
- Co-recycling different types of Al alloys (such as 5xxx series with 6xxx series).

Although DSSMC may recycle and convert a variety of industrial metals, the analysis in this section will be limited to two type of metals: aluminum alloys and steels for which the widespread applications of the transformational DSSMC technology is expected to have highest energy, economic, environmental impacts. DSSMC may be applied to steel products especially on tool materials used for the dies and the plungers.

The analysis on the energy, economic, and environmental impacts from the application of the DSSMC technology may be divided into two parts. The first part describes the procedure, references and assumptions used in the analysis. The second part summarizes the analysis results.

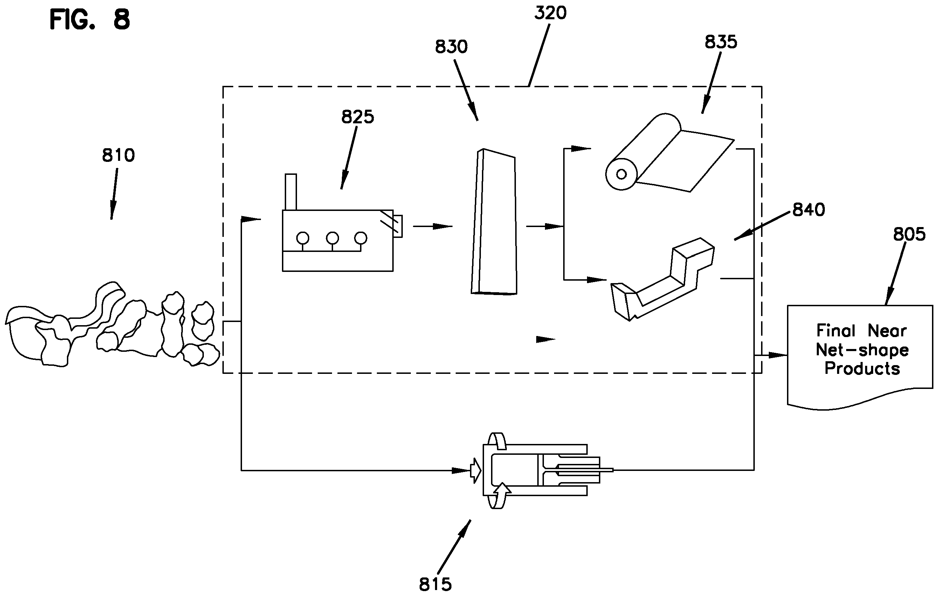

FIG. 8 shows the comparison of the basic operation steps of the current technologies and the new technologies for converting scraps to near net-shape products.

Current Baseline Technology

Secondary aluminum production - aluminum produced entirely from recycled aluminum scrap - is an example of as the current baseline technology (e.g. conventional.) Secondary aluminum production may comprise a number of major operations. The scraps are first melted in a furnace, cast into large ingot, billets, T-bar, slab or strip, and finally rolled, extruded or otherwise formed into the components and useful products. The secondary aluminum industry is a large market - currently, over 50% of the domestically produced Al products are made from aluminum scraps.

A mini steel mill may comprise a conventional system for steel production. The mini steel mill may comprise an electric arc furnace, billet continuous caster and rolling mill capable of making long products (bars, rod, sections, etc). The mini steel mill takes 100% scrap charge and makes bar and rod stocks as the final product. Therefore, both the input and output are the same in the direct conversion and the mini-mill steel converting processes.

The DSSMC process consistent with embodiments of the invention may produce near net-shape products from recyclable scraps in a single step, for the products described above by the current baseline technologies.

FIG. 8 shows steps involved in making comparable final products 805 from recyclable scraps 810 for embodiments of the invention 815 and the current technology 820. Current technology 820 may comprise a furnace 825 to melt recyclable scraps 810. The melted recyclable scraps may be cast 830 into ingots. The ingots then may be formed into the final products 805 via rolling 835 or extrusion 840.

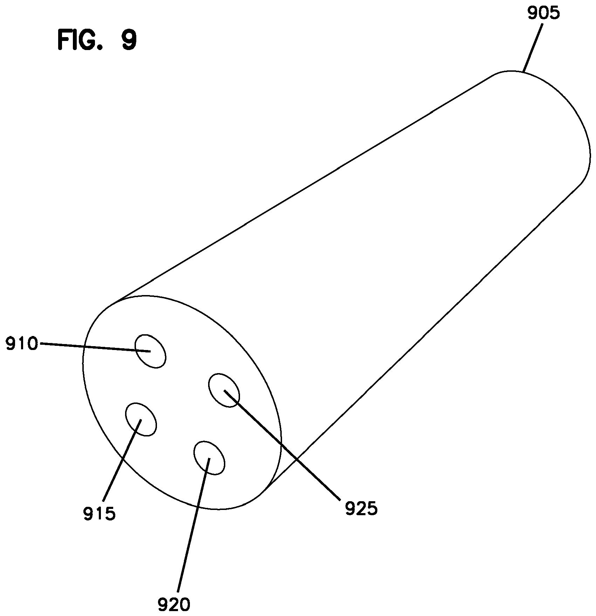

FIG. 9 shows an example of final products 805. Embodiments of the invention may be used to extrude complex objects. For example, FIG. 9 shows a cylindrical bar 905 having a first internal rod 910, a second internal rod 915, a third internal rod 920, and a fourth internal rod 925. During manufacturing, multiple chambers may be filled with swarf and multiple dies may be used to form cylindrical bar 905, first internal rod 910, second internal rod 915, third internal rod 920, and fourth internal rod 925. For instance, a first chamber may be filled with swarf and have a first die capable of extruding first internal rod 910, second internal rod 915, third internal rod 920, and fourth internal rod 925. A second chamber may be filled with swart, either of the same metal/alloy, or a different metal/alloy, and have a second die capable of extruding cylindrical bar 905. Consistent with embodiments of the invention, during a single extrusion both cylindrical bar 905 and first internal rod 910, second internal rod 915, third internal rod 920, and fourth internal rod 925 may be formed.

OPERATIONAL EXAMPLE

Analysis Procedure

Energy analysis may comprise two major steps. The first step may comprise determining the unit energy consumption for both the current baseline technology (conventional) and embodiments consistent with the invention. This included determination of the theoretical minimum energy requirements for both current and embodiments consistent with the invention, the actual average energy usage by U.S. industry for the current baseline technology, and the estimated energy usage for embodiments consistent with the invention. To ensure proper energy and environmental calculations, the "process energy" - the energy used at a process facility (the onsite energy) - may be determined. It does not include the energy losses incurred at offsite utilities (such as power generation and transmission loss).

In the second step, appropriate U.S. domestic Al and steel production figures may be obtained from available market survey. The unit energy usage data from the first step, together with the statistic annual production data from the second step, may be used as input to, for example, Energy Savings Calculation Tool (GPRA2004 Excel spreadsheet) from DOE ITP to determine the overall energy, economic and environmental benefits of the new technology.

UNIT ENERGY CONSUMPTION COMPARISON

Energy Usage Of Current Baseline (Conventional) Technology

The energy usage of the current baseline technology can be found from DOE reports. In general, a variety of fuels are used in different stages of Al or steel making. Choate and Green's study provides a detailed account of the energy used in aluminum recycling. According to this study, the energy usage for making final near net-shape product is:

$$\frac{Total\ Energy}{kg\ AL} = Ingot\ Casting + \frac{(2.75 * Hot\ Rolling + 2.75 * Cold\ Rolling + 1.72 * Extrusion)}{6.72}$$

In this equation, it is assumed that percentages of ingots used for rolling and extrusion are proportional to the annual rolling and extrusion production rates: 2.75 million metric tons for hot rolling, 2.75 million metric tons for cold rolling, and 1.72 million metric tons for extrusion. The actual energy consumptions for steel recycling (EAF furnaces in mini steel mills) are estimated in the similar fashion according to the study by Stubbles.

The average actual unit energy consumption figures are presented in Table 1, together with the theoretical minimum energy requirement for both current (conventional) and new technology (embodiments of the invention), and estimated energy usage for embodiments of the present invention. The theoretical minimum energy requirements were obtained from Choate and Green for aluminum, and Fruehan's study for steel.

Energy usage that may be used by embodiments of the invention

The unit energy consumption of embodiments of the invention, for example, is estimated below. In DSSMC process, friction may be used to drive the localized deformation and heating. Both the frictional heating and high-strain rate plastic deformation result in an increase in temperature of the processed region. Therefore, the energy input can be estimated from the temperature increase in the processing region. The minimum theoretical energy may be determined from adiabatic heating by plastic work:

$$\Delta H = \int_{T_2} C_P dT$$

where $C_p$ is the specific heat capacity of the material processed, and $T_2$ is the processing temperature. The processing temperature is assumed to be 450°C for aluminum alloys and 1300°C for steels, based on the typical hot forging temperatures of the materials. The average specific heat is 0.9 and 0.45 respectively for Al and Fe.

The energy efficiency of the new technology is assumed to be 50%. This figure is based on the fact that the new technology is primarily a mechanical deformation process. According to Choate and Green, the efficiency of electrical/hydraulic system for rolling and extrusion is 75%. A lower efficiency may be assumed to account for other uncounted energy loses of the new technology.

Energy reduction on unit product basis

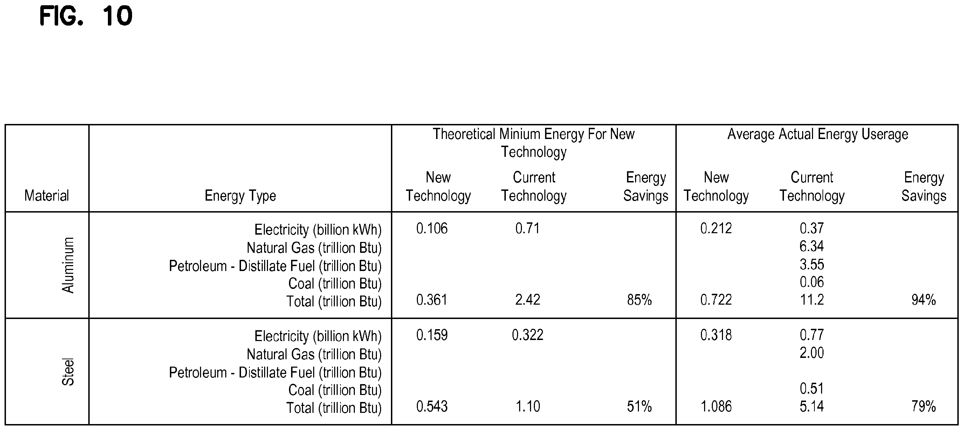

FIG. 10 shows the comparison of the energy consumption for producing one million metric tons of products using embodiments of the present invention and the current baseline technology. The energy usage was broken down according to the type of fuels used in the current Al and steel making (from 100% scraps), as different types of fuels have different environmental impact (such as $CO_2$ emission). It may be assumed that the DSSMC process is an electric/hydraulic driven mechanical system that uses 100% electricity.

As shown in FIG. 10, the new technology (i.e., embodiments of the present invention) has enormous energy saving potential. The reduction of the theoretical minimum energy usage is 85% and 51%, respectively for Al alloys and steels. Because of the energy inefficiencies of the current (i.e., conventional) technology, the estimated reductions of the actual energy usage are over 90% for aluminum and about 80% for steels. Similar energy savings may be achieved with the solid-state friction stir welding process.

When designing a product (e.g. a wire), it may be desirable for the product to have certain properties. These certain properties may be achieved by making the product of different metal alloys and maybe including a certain type or types of nanoparticles in the product. To achieve these desirable properties, the nanoparticles and/or microstructures of different metal alloys may be substantially homogeneously distributed within the product. These certain properties may include, but are not limited to, strength, conductivity, thermal expansion, malleability, etc.

Consistent with embodiments of the invention, a plastic zone extrusion system may be provided that may extrude stock to form a wire comprising nanoparticles and/or microstructures of a first alloy and a second alloy that may be substantially homogeneously distributed within the wire. If the nanoparticles or alloys were heated to their liquid or molten state, the materials comprising nanoparticles or alloys would stratify into respective layers comprising the nanoparticles or alloys and would not be homogeneously distributed. However, the plastic zone extrusion system, consistent with embodiments of the invention, may take the stock comprising different alloys and or nanoparticles to their "plastic zone" that comprises a solid state in which the stock is malleable, but not hot enough to be in a liquid or molten state. Because the plastic zone extrusion system, consistent with embodiments of the invention, mixes the stock (which may or may not include nanoparticles) while in its plastic zone, any wire extruded from the stock by the plastic zone extrusion system may include nanoparticles and/or microstructures of a first alloy and a second alloy that may be substantially homogeneously distributed within the wire.

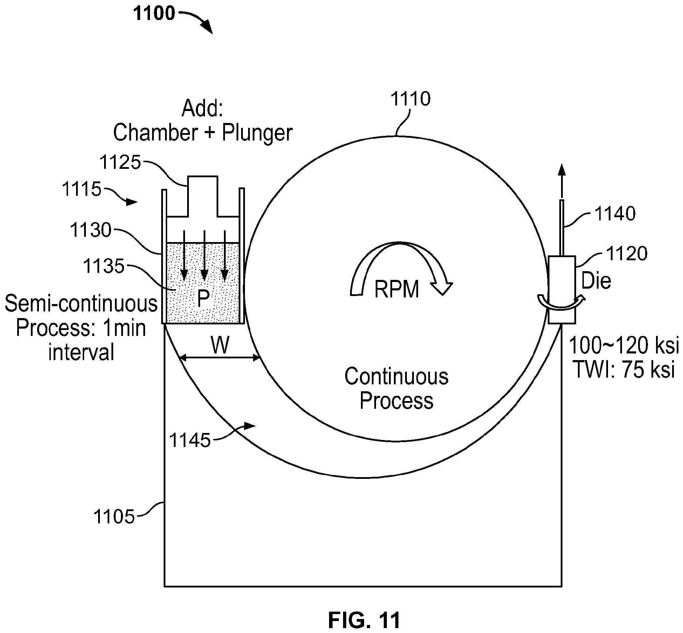

FIG. 11 shows a plastic zone extrusion system 1100 consistent with embodiments of the invention for providing plastic zone extrusion. As shown in FIG. 11, plastic zone extrusion system 1100 may comprise a conveyer comprising a base 1105 and a wheel 1110. Plastic zone extrusion system 1100 further comprises a compressor 1115 and a die 1120. Compressor 1115 comprises a plunger 1125 and a chamber 1130. Compressor 1115 is configured to generate frictional heat in stock 1135 to place stock 1135 in a plastic zone of stock 1135. Die 1120 is configured to receive stock 1135 in its plastic zone from the conveyer and extrude stock 1135 to form a wire 1140. Consistent with embodiments of the invention, a space 1145 between wheel 1110 and base 1105 may gradually decrease in size from compressor 1115 to die 1120. In other words, space 1145 may have a width W at the compressor 1115 end of space 1145, but the width of space 1145 may be much smaller than W at the die 1120 end of space 1145.

Consistent with embodiments of the invention, stock 1135 is placed in compressor 1115. Once compressor 1115 receives stock 1135 into chamber 1130, plunger 1125 compresses stock 1135 and forces (e.g., extrudes) stock 1135 out the bottom end of chamber 1130. While plunger 1125 is compressing stock 1135, plunger 1125 also rotates within chamber 1130 thus mixing stock 1135 and generating frictional heat. The generated frictional heat heats stock 1135 to a "plastic zone" of the stock.

The plastic zone comprises a solid state in which stock 1135 is malleable, but not hot enough to be in a liquid or molten state. In other words, plastic zone extrusion system 1100 rotates plunger 1125 to generate heat by rotating, mixing, and compressing stock 1135 within plastic zone extrusion system 1100. Once the generated heat places stock 1135 in the stock's plastic zone, the stock is extruded out the bottom end of chamber 1130. The process may be continuously repeated by intermittently feeding more stock into compressor 1115. For example, plunger 1125 may be removed, more stock may be placed in chamber 1130, and plunger 1125 may be replaced in chamber 1130.

Once stock 1135, now in its plastic zone, leaves the bottom end of chamber 1130, it enters space 1145. Wheel 1110 may be rotating in a direction (e.g. counter clockwise) that may force stock 1135 away from the bottom end of chamber 1130 and towards die 1120. Because space 1145 between wheel 1110 and base 1105 may gradually decrease in size from compressor 1115 to die 1120, the movement of wheel 1110 may also compress (e.g. compact) and mix stock 1135.

Furthermore, because space 1145 between wheel 1110 and base 1105 may gradually decrease in size from compressor 1115 to die 1120, there may be more volume in space 1145 at the end closest to compressor 1115 than at the end closest to die 1120. Consequently, the end of space 1145 closest to compressor 1115 may act as a reservoir for stock 1135 allowing time for intermittently feeding more stock into compressor 1115 (e.g. continuously repeated by, for example, removing plunger 1125, placing more stock in chamber, and replacing plunger in chamber 1130.)

Consistent with related embodiments, not part of the claimed invention, compressor 1115 may be optional and the conveyer may be configured to generate frictional heat in stock 1135 to place stock 1135 in the plastic zone of stock 1135. Moreover, plastic zone may be achieved by die 1120, for example, by die 1120 rotating.

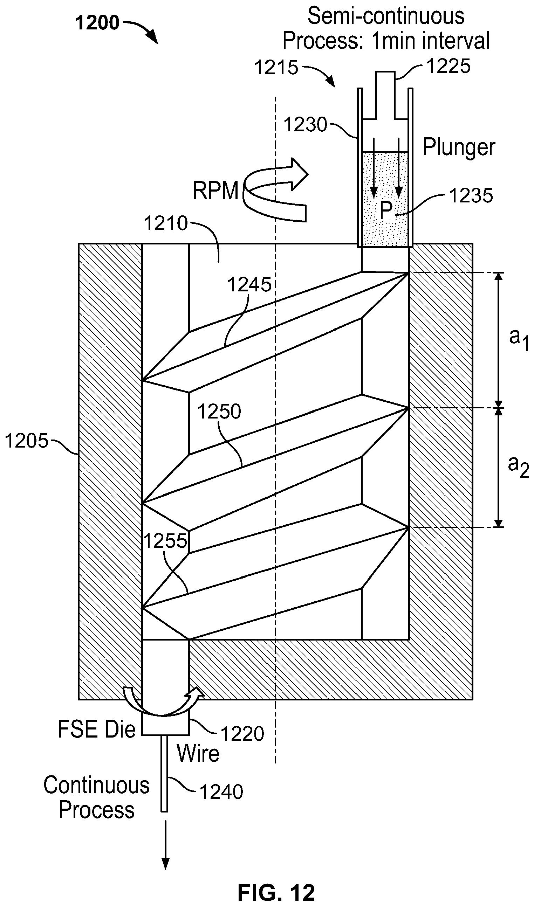

FIG. 12 shows a plastic zone extrusion system 1200 consistent with embodiments of the invention for providing plastic zone extrusion. As shown in FIG. 12, plastic zone extrusion system 1200 may comprise a conveyer comprising a base 1205 and a screw 1210 (e.g. a varying pitch screw.) Plastic zone extrusion system 1200 further comprises a compressor 1215 and a die 1220. Compressor 1215 comprises a plunger 1225 and a chamber 1230. Compressor 1215 is configured to generate frictional heat in stock 1235 to place stock 1235 in a plastic zone of stock 1235. Die 1220 is configured to receive stock 1235 in its plastic zone from the conveyer and extrude stock 1235 to form a wire 1240. Screw 1210 may include a plurality of threads (e.g. a first thread 1245, a second thread 1250, and a third thread 1255.) Consistent with embodiments of the invention, a space $a_1$ (between first thread 1245 and second thread 1250) may be greater than a space $a_2$ (between second thread 1250 and third thread 1255).

Consistent with embodiments of the invention, stock 1235 is placed in compressor 1215. Once compressor 1215 receives stock 1235 into chamber 1230, plunger 1225 compresses stock 1235 and forces (e.g., extrudes) stock 1235 out the bottom end of chamber 1230. While plunger 1225 is compressing stock 1235, plunger 1225 also rotates within chamber 1230 thus mixing stock 1235 and generating frictional heat. The generated frictional heat heats stock 1235 to a "plastic zone" of the stock.

The plastic zone comprises a solid state in which stock 1235 is malleable, but not hot enough to be in a liquid or molten state. In other words, plastic zone extrusion system 1200 rotates plunger 1225 to generate heat by rotating, mixing, and compressing stock 1235 within plastic zone extrusion system 1200. Once the generated heat places stock 1235 in the stock's plastic zone, the stock is extruded out the bottom end of chamber 1230. The process may be continuously repeated by intermittently feeding more stock into compressor 1215. For example, plunger 1225 may be removed, more stock may be placed in chamber 1230, and plunger 1225 may be replaced in chamber 1230.

Once stock 1235, now in its plastic zone, leaves the bottom end of chamber 1230, it enters a space between screw 1210 and base 1205. Screw 1210 may be rotating in a direction that may force stock 1235 away from the bottom end of chamber 1230 and towards die 1220. Because the space between screw 1210 and base 1205 may gradually decrease in size from compressor 1215 to die 1220 (e.g. because $a_1 > a_2$), the movement of screw 1210 may also compress (e.g. compact) and mix stock 1235.

Furthermore, because the space between screw 1210 and base 1205 may gradually decrease in size from compressor 1215 to die 1220 (e.g. because $a_1 > a_2$), there may be more volume in the space at the end closest to compressor 1215 than at the end closest to die 1220. Consequently, the end of the space closest to compressor 1215 may act as a reservoir for stock 1235 allowing time for intermittently feeding more stock into compressor 1215 (e.g. continuously repeated by, for example, removing plunger 1225, placing more stock in chamber, and replacing plunger in chamber 1230.)

Consistent with related embodiments, not part of the claimed invention, compressor 1215 may be optional and the conveyer may be configured to generate frictional heat in stock 1235 to place stock 1235 in the plastic zone of stock 1235. Moreover, plastic zone may be achieved by die 1220, for example, by die 1220 rotating.

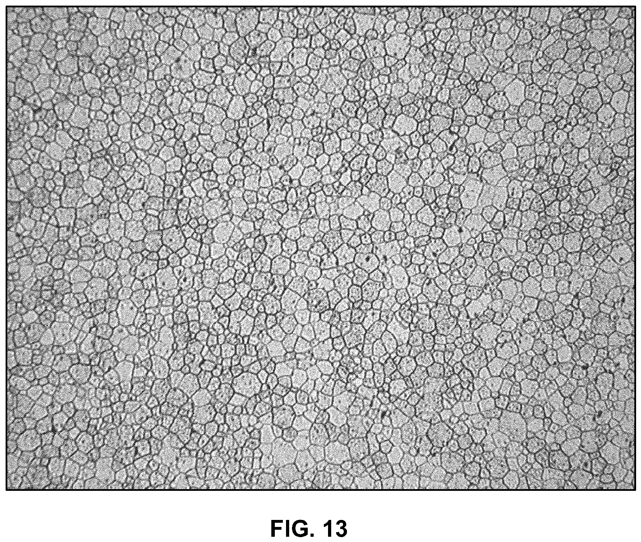

FIG. 13 shows a cross-section of wire produced by the plastic zone extrusion system (e.g. system 1100 or system 1200) consistent with embodiments of the invention. The mosaic of microstructures shown in FIG. 13 illustrate that various elements comprising stock 1135 or stock 1235 may be substantially homogeneously distributed within wire 1140 and wire 1240 respectively. These various elements may comprise, but are not limited to, a single type of metal (or alloy), different types of metals (or metal alloys), and nanoparticles placed in stock 1135 or stock 1235. Because the stock (e.g. stock 1135 or stock 1235) was taken to its plastic zone and not melted, adhesion between the microstructures shown in FIG. 13 may be high. If the nanoparticles or alloys were heated to their liquid or molten state, the materials comprising nanoparticles or alloys would stratify into respective layers comprising the nanoparticles or alloys and would not be homogeneously distributed.

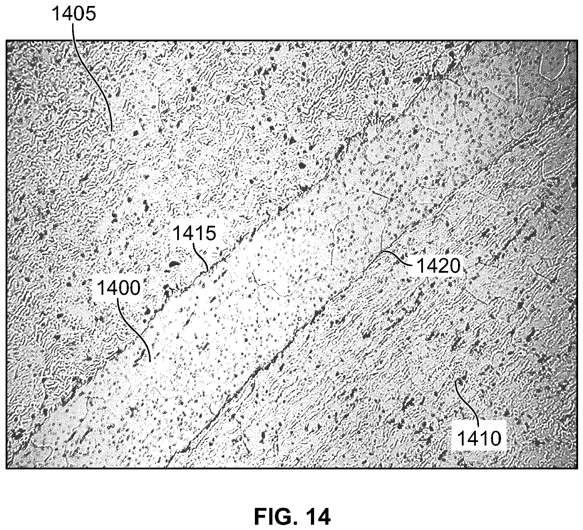

Consistent with embodiments of the invention, stock comprising different metals alloys (e.g. a first alloy and a second alloy) may be placed in system 1100 or system 1200. Consequently, embodiments of the invention may produce wire (e.g. wire 1140 and wire 1240) that may include layered micro structures as illustrated in FIG. 14. As shown in FIG. 14, the wire may include a first microstructure 1400, a second microstructure 1405, and a third microstructure 1410. First microstructure 1400 may comprise the first alloy and second microstructure 1405 and third microstructure 1410 may comprise the second alloy.

Because the stock (e.g. stock 1135 or stock 1235) was taken to its plastic zone and not melted, adhesion between first microstructure 1400 (e.g. along a first edge 1415) and second microstructure 1405 and between first microstructure 1400 and third microstructure 1410 (e.g. along a second edge 1420) may be high. If the alloys were heated to their liquid or molten state, the materials comprising the alloys would stratify and would not result in the structures shown in FIG. 14.

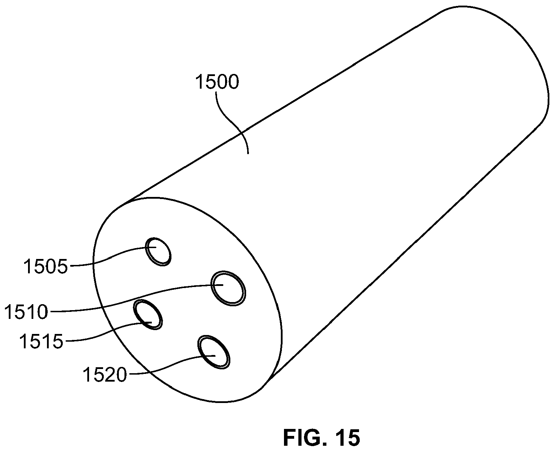

As stated above, the stock used to produce the layered micro structures as illustrated in FIG. 14 may include different metals alloys (e.g. the first alloy and the second alloy.) This stock may comprise chips of the different alloys placed into the system. As an alternative or in addition, the stock may include one or more slugs as shown in FIG. 15. As shown in FIG. 15, a slug 1500 may comprise the first alloy. Bores may be placed in slug 1500 and then filled with the second alloy. These filled bores may comprise a first filled bore 1505, a second filled bore 1510, a third filled bore 1515, and a forth filled bore 1520.

The ratios of the different metal alloys to the total amount of stock may be chosen to give the wire certain desired characteristics. For example, the first alloy may have a high thermal expansion and the second alloy may have a low thermal expansion. The amount of the first alloy and the second alloy may be chosen to give the wire a desired thermal expansion between that of the two alloys.

While certain embodiments of the invention have been described, other embodiments may exist. Further, the disclosed methods' stages may be modified in any manner, including by reordering stages and/or inserting or deleting stages, without departing from the scope of the invention. While the specification includes examples, the invention's scope is defined by the appended claims.

A related system comprises:

> a compressor configured to receive a stock;
> a conveyer configured to;
>
> > receive the stock from the compressor, and
> > transport the stock from the compressor; and
>
> a die configured to;
>
> > receive the stock from the conveyer, and
> > extrude the stock to form a wire.

The compressor may comprise a chamber and a plunger, and the plunger may be configured to rotate in the chamber.

The conveyer may comprise a wheel and a base, and the wheel may be configured to rotate to transport the stock from the compressor to the die.

The conveyer may comprise a space between the wheel and the base configured to receive the stock from the compressor, and the space between the wheel and the base may gradually decreases from the compressor to the die.

The conveyer may comprise a screw and a base, and the screw may be configured to rotate in the base to transport the stock from the compressor to the die.

The screw may comprise a first thread, a second thread, and a third thread, the first thread being closer to the compressor than the second thread and the third thread, the third thread being closer to the die than the first thread and the second thread, the second thread being between the first thread and the third thread, a space between the first thread and the second thread being greater than a space between the second thread and the third thread.

The conveyer being configured to transport the stock from the compressor may comprise the conveyer being configured to mix the stock.

The stock may comprise at least two of the following: a first alloy, a second alloy, first nano-particles, and second nano-particles.

The compressor may be configured to generate frictional heat in the stock to place the stock in a plastic zone of the stock.

The conveyer may be configured to generate frictional heat in the stock to place the stock in a plastic zone of the stock.

The die may be configured to generate frictional heat in the stock to place the stock in a plastic zone of the stock.

The stock may comprise at least a first alloy and a second alloy; and the wire may comprise a first microstructure and second microstructure having a high adhesion between the first microstructure and second microstructure.

The stock may comprise a metal and nanoparticles; and the wire may comprise microstructures of the metal and of the nanoparticles distributed substantially homogeneously within the wire.

A related method comprises:

> generating frictional heat in stock to place the stock in a plastic zone of the stock;
> receiving, at a conveyer, the stock in its plastic zone;
> transporting, by the conveyer, the stock in its plastic zone;
> receiving, at a die, the stock in its plastic zone from the conveyer; and
> extruding, by the die, the stock to form a wire.

Generating frictional heat in the stock may comprise generating the frictional heat in the stock by a compressor comprising a chamber and a plunger.

Generating frictional heat in the stock may comprise generating the frictional heat in the stock by a compressor when a plunger rotates inside a chamber.

The method may further comprise mixing the stock by a compressor when a plunger rotates inside a chamber.

Transporting, by the conveyer, the stock in its plastic zone may comprise transporting by the conveyer comprising a wheel and a base wherein a space between the wheel and the base gradually decreases between a compressor and the die.

Transporting, by the conveyer, the stock in its plastic zone may comprise transporting by the conveyer comprising a screw and a base wherein the screw comprises a first thread, a second thread, and a third thread, the first thread being closer to a compressor than the second thread and the third thread, the third thread being closer to the die than the first thread and the second thread, the second thread being between the first thread and the third thread, a space between the first thread and the second thread being greater than a space between the second thread and the third thread.

Transporting the stock in its plastic zone may comprise mixing, by the conveyer, the stock as the stock in being transported by the conveyer, and mixing, by the conveyer, the stock may comprise mixing the stock comprising at least two of the following: a first alloy, a second alloy, first nano-particles, and second nano-particles. Alternatively or additionally, mixing, by the conveyer, the stock may comprise mixing the stock comprising at least two of the following: a first alloy, a second alloy, first nano-particles, and second nano-particles wherein the first nano-particles comprises at least one of the following: aluminum oxide, silicon carbide, copper, and carbon nano-tubes.

Another related system comprises:

a compressor configured to generate frictional heat in stock to place the stock in a plastic zone of the stock, the stock comprising a first alloy and a second alloy;
a conveyer configured to;

receive the stock in its plastic zone from the compressor, and
transport the stock in its plastic zone from the compressor, wherein the conveyer being configured to transport the stock in its plastic zone from the compressor comprises the conveyer being configured to mix the first alloy and the second alloy in the stock; and

a die configured to;

receive the stock in its plastic zone from the conveyer, and
extrude the stock to form a wire comprising microstructures of the first alloy and the second alloy being substantially homogeneously distributed within the wire.

**Claims**

1. An extrusion system comprising:

a compressor (1115; 1215) configured to receive a stock (1135; 1235);
a conveyer (1105, 1110; 1205, 1210) configured to:

receive the stock from the compressor, and
transport the stock from the compressor; and

a die (1120; 1220) configured to:

receive the stock from the conveyer, and
extrude the stock to form a wire (1140; 1240),

**characterized in that** the compressor (1115; 1215) comprises a chamber (1130; 1230) and a plunger (1125; 1225), the plunger being configured to rotate in the chamber to generate frictional heat in the stock (1135; 1235) to place the stock in a plastic zone of the stock, and to mix the stock.

2. The system of claim 1, wherein the conveyer comprises a wheel (1110) and a base (1105).

3. The system of claim 2, wherein the wheel (1110) is configured to rotate to transport the stock (1135) from the compressor (1115) to the die (1120).

4. The system of claim 2, wherein the conveyer comprises a space (1145) between the wheel (1110) and the base (1105) configured to receive the stock (1135) from the compressor (1115).

5. The system of claim 4, wherein the space (1145) between the wheel (1110) and the base (1105) gradually decreases from the compressor (1115) to the die (1120).

6. The system of claim 1, wherein the conveyer comprises a screw (1210) and a base (1205).

7. The system of claim 6, wherein the screw (1210) is configured to rotate in the base (1205) to transport the stock (1235) from the compressor (1215) to the die (1220).

8. The system of claim 6, wherein the screw (1210) comprises a first thread (1245), a second thread (1250), and a third thread (1255), the first thread being closer to the compressor (1215) than the second thread and the third thread, the third thread being closer to the die (1220) than the first thread and the second thread, the second thread being between the first thread and the third thread, a space ($a_1$) between the first thread and the second thread being greater than a space ($a_2$) between the second thread and the third thread.

9. The system according to any of claims 2 to 8, wherein the conveyer being configured to transport the stock (1135; 1235) from the compressor (1115; 1215) is configured to compress and mix the stock.

10. An extrusion method comprising:

receiving stock (1135; 1235) in a chamber (1130; 1230) of a compressor (1115; 1215);
rotating a plunger (1125; 1225) of the compressor in the chamber to generate frictional heat in the stock (1135; 1235) to place the stock in a plastic zone of the stock, and to mix the stock;
receiving, at a conveyer (1105, 1110; 1205, 1210), the stock in its plastic zone;
transporting, by the conveyer, the stock in its plastic zone;
receiving, at a die (1120; 1220), the stock in its plastic zone from the conveyer; and
extruding, by the die, the stock to form a wire (1140; 1240).

11. The method of claim 10, wherein receiving stock (1135; 1235) in a chamber (1130; 1230) of a compressor includes receiving the stock comprising a metal and nanoparticles; and
wherein extruding, by the die (1120; 1220), the stock to form a wire (1140; 1240) includes forming the wire (1140; 1240) to comprise microstructures of the metal and of the nanoparticles distributed substantially homogeneously within the wire.

12. The method of claim 10, wherein receiving stock (1135; 1235) in a chamber (1130; 1230) of a compressor includes receiving the stock comprising at least a first alloy and a second alloy; and
wherein extruding, by the die (1120; 1220), the stock to form a wire (1140; 1240) includes forming the wire (1140; 1240) to comprise a first microstructure and second microstructure having a high adhesion between the first microstructure and second microstructure.

**Patentansprüche**

1. Extrusionssystem umfassend:

einen Kompressor (1115; 1215), der konfiguriert ist, um einen Vorrat (1135; 1235) aufzunehmen;
eine Fördereinrichtung (1105, 1110; 1205, 1210) konfiguriert zur:

Aufnahme des Vorrats vom Kompressor, und
Transport des Vorrats vom Kompressor; und

eine Düse (1120; 1220) konfiguriert zur:

Aufnahme des Vorrats von der Fördereinrichtung, und
Extrusion des Vorrats, um einen Draht (1140; 1240) zu formen,

**dadurch gekennzeichnet, dass** der Kompressor (1115; 1215) eine Kammer (1130; 1230) und einen Kolben (1125; 1225) umfasst, wobei der Kolben konfiguriert ist, um in der Kammer zu rotieren, um Reibungswärme im Vorrat (1135; 1235) zu erzeugen, um den Vorrat in eine plastische Zone des Vorrats zu bringen, und um den Vorrat zu vermischen.

2. System nach Anspruch 1, **dadurch gekennzeichnet, dass** die Fördereinrichtung ein Rad (1110) und eine Basis (1105) umfasst.

3. System nach Anspruch 2, **dadurch gekennzeichnet, dass** das Rad (1110) konfiguriert ist zu rotieren, um den Vorrat (1135) vom Kompressor (1115) zur Düse (1120) zu transportieren.

4. System nach Anspruch 2, **dadurch gekennzeichnet, dass** die Fördereinrichtung einen Raum (1145) zwischen dem Rad (1110) und der Basis (1105) umfasst, welcher konfiguriert ist, um den Vorrat (1135) vom Kompressor (1115) aufzunehmen.

5. System nach Anspruch 4, **dadurch gekennzeichnet, dass** sich der Raum (1145) zwischen dem Rad (1110) und der Basis (1105) vom Kompressor (1115) zur Düse (1120) allmählich verringert.

6. System nach Anspruch 1, **dadurch gekennzeichnet, dass** die Fördereinrichtung eine Schnecke (1210) und eine Basis (1205) umfasst.

7. System nach Anspruch 6, **dadurch gekennzeichnet, dass** die Schnecke (1210) konfiguriert ist, um in der Basis (1205) zu rotieren, um den Vorrat (1235) vom Kompressor (1215) zur Düse (1220) zu transportieren.

8. System nach Anspruch 6, **dadurch gekennzeichnet, dass** die Schnecke (1210) ein erstes Gewinde (1245), ein zweites Gewinde (1250) und ein drittes Gewinde (1255) umfasst, wobei sich das erste Gewinde näher am Kompressor (1215) befindet als das zweite Gewinde und das dritte Gewinde, wobei sich das dritte Gewinde näher an der Düse (1220) befindet als das erste Gewinde und das zweite Gewinde, wobei sich das zweite Gewinde zwischen dem ersten Gewinde und dem dritten Gewinde befindet, wobei ein Raum ($a_1$) zwischen dem ersten Gewinde und dem zweiten Gewinde größer ist als ein Raum ($a_2$) zwischen dem zweiten Gewinde und dem dritten Gewinde.

9. System nach einem der Ansprüche 2 bis 8, **dadurch gekennzeichnet, dass** die Fördereinrichtung, welche konfiguriert ist, um den Vorrat (1135; 1235) vom Kompressor (1115; 1215) zu transportieren, konfiguriert ist, um den Vorrat zu komprimieren und zu vermischen.

10. Extrusionsverfahren umfassend:

Aufnehmen von Vorrat (1135; 1235) in einer Kammer (1130; 1230) eines Kompressors (1115; 1215);
Rotieren eines Kolbens (1125; 1225) des Kompressors in der Kammer, um Reibungswärme im Vorrat (1135; 1235) zu erzeugen, um den Vorrat in eine plastische Zone des Vorrats zu bringen, und um den Vorrat zu vermischen;
Aufnehmen des Vorrats in seiner plastischen Zone an einer Fördereinrichtung (1105, 1110; 1205, 1210);
Transportieren des Vorrats in seiner plastischen Zone mittels der Fördereinrichtung;
Aufnehmen des Vorrats in seiner plastischen Zone von der Fördereinrichtung an einer Düse (1120; 1220); und
Extrudieren des Vorrats durch die Düse, um einen Draht (1140; 1240) zu formen.

11. Verfahren nach Anspruch 10, **dadurch gekennzeichnet, dass**
das Aufnehmen von Vorrat (1135; 1235) in einer Kammer (1130; 1230) eines Kompressors das Aufnehmen von Vorrat umfasst, welcher ein Metall und Nanopartikel umfasst; und wobei
das Extrudieren des Vorrats durch die Düse (1120; 1220), um einen Draht (1140; 1240) zu formen, das Formen des Drahtes (1140; 1240) umfasst, so dass dieser Mikrostrukturen des Metalls und der Nanopartikel umfasst, welche im Wesentlichen homogen innerhalb des Drahtes verteilt sind.

12. Verfahren nach Anspruch 10, **dadurch gekennzeichnet, dass**
das Aufnehmen von Vorrat (1135; 1235) in einer Kammer (1130; 1230) eines Kompressors das Aufnehmen von Vorrat umfasst, welcher mindestens eine erste Legierung und eine zweite Legierung umfasst; und wobei
das Extrudieren des Vorrats durch die Düse (1120; 1220), um einen Draht (1140; 1240) zu formen, das Formen des Drahtes (1140; 1240) umfasst, so dass dieser eine erste Mikrostruktur und eine zweite Mikrostruktur umfasst, mit einer hohen Haftung zwischen der ersten Mikrostruktur und der zweiten Mikrostruktur.

**Revendications**

1. Système d'extrusion comprenant :

   un compresseur (1115 ; 1215) configuré pour recevoir un stock (1135 ; 1235) ;
   un convoyeur (1105, 1110 ; 1205, 1210) configuré pour :

   recevoir le stock du compresseur, et
   transporter le stock du compresseur ; et

   une filière (1120 ; 1220) configurée pour :

   recevoir le stock du convoyeur, et
   extruder le stock pour former un câble (1140 ; 1240),
   **caractérisé en ce que** le compresseur (1115 ; 1215) comprend une chambre (1130 ; 1230) et un piston (1125 ; 1225), le piston étant configuré pour tourner dans la chambre pour produire de la chaleur frictionnelle dans le stock (1135 ; 1235) pour placer le stock dans une zone plastique du stock, et pour mélanger le stock.

2. Système selon la revendication 1, dans lequel le convoyeur comprend une roue (1110) et une base (1105).

3. Système selon la revendication 2, dans lequel la roue (1110) est configurée pour tourner pour transporter le stock (1135) à partir du compresseur (1115) vers la filière (1120).

4. Système selon la revendication 2, dans lequel le convoyeur comprend un espace (1145) entre la roue (1110) et la base (1105) configuré pour recevoir le stock (1135) du compresseur (1115).

5. Système selon la revendication 4, dans lequel l'espace (1145) entre la roue (1110) et la base (1105) diminue progressivement du compresseur (1115) vers la filière (1120).

6. Système selon la revendication 1, dans lequel le convoyeur comprend une vis (1210) et une base (1205).

7. Système selon la revendication 6, dans lequel la vis (1210) est configurée pour tourner dans la base (1205) pour transporter le stock (1235) du compresseur (1215) vers la filière (1220).

8. Système selon la revendication 6, dans lequel la vis (1210) comprend un premier filetage (1245), un second filetage (1250), et un troisième filetage (1255), le premier filetage étant plus proche du compresseur (1215) que le second filetage et le troisième filetage, le troisième filetage étant plus proche de la filière (1220) que le premier filetage et le second filetage, le second filetage se trouvant entre le premier filetage et le troisième filetage, un espace ($a_1$) entre le premier filetage et le second filetage étant supérieur à un espace ($a_2$) entre le second filetage et le troisième filetage.

9. Système selon l'une quelconque des revendications 2 à 8, dans lequel le convoyeur étant configuré pour transporter le stock (1135 ; 1235) à partir du compresseur (1115 ; 1215) est configuré pour comprimer et mélanger le stock.

10. Procédé d'extrusion comprenant :

    la réception de stock (1135 ; 1235) dans une chambre (1130 ; 1230) d'un compresseur (1115 ; 1215) ;
    la rotation d'un piston (1125 ; 1225) du compresseur dans la chambre pour produire de la chaleur frictionnelle dans le stock (1135 ; 1235) pour placer le stock dans une zone plastique du stock, et pour mélanger le stock ;
    la réception, sur un convoyeur (1105, 1110 ; 1205, 1210), du stock dans sa zone plastique ;
    le transport, par le convoyeur, du stock dans sa zone plastique ;
    la réception, sur une filière (1120 ; 1220), du stock dans sa zone plastique à partir du convoyeur ; et
    l'extrusion, par la filière, du stock pour former un câble (1140 ; 1240).

11. Procédé selon la revendication 10,
    dans lequel la réception de stock (1135 ; 1235) dans une chambre (1130 ; 1230) d'un compresseur comprend la réception du stock comprenant un métal et des nanoparticules ; et
    dans lequel l'extrusion, par la filière (1120 ; 1220), du stock pour former un câble (1140 ; 1240) comprend la formation du câble (1140 ; 1240) pour comprendre des microstructures du métal et des nanoparticules distribuées de manière pratiquement homogène dans le câble.

12. Procédé selon la revendication 10,
dans lequel la réception de stock (1135 ; 1235) dans une chambre (1130 ; 1230) d'un compresseur comprend la réception du stock comprenant au moins un premier alliage et un second alliage ; et
dans lequel l'extrusion, par la filière (1120 ; 1220), du stock pour former un câble (1140 ; 1240) comprend la formation du câble (1140 ; 1240) pour comprendre une première microstructure et une seconde microstructure ayant une adhérence élevée entre les première microstructure et seconde microstructure.

EP 2 777 837 B1

**FIG. 1**

100

105

110

115

# FIG. 2

FIG. 3

FIG. 4

## FIG. 5

**FIG. 6**

**FIG. 7**

FIG. 8

EP 2 777 837 B1

FIG. 9

# FIG. 10

| Material | Energy Type | Theoretical Minium Energy For New Technology | | | Average Actual Energy Userage | | |
|---|---|---|---|---|---|---|---|
| | | New Technology | Current Technology | Energy Savings | New Technology | Current Technology | Energy Savings |
| Aluminum | Electricity (billion kWh) | 0.106 | 0.71 | | 0.212 | 0.37 | |
| | Natural Gas (trillion Btu) | | | | | 6.34 | |
| | Petroleum - Distillate Fuel (trillion Btu) | | | | | 3.55 | |
| | Coal (trillion Btu) | | | | | 0.06 | |
| | Total (trillion Btu) | 0.361 | 2.42 | 85% | 0.722 | 11.2 | 94% |
| Steel | Electricity (billion kWh) | 0.159 | 0.322 | | 0.318 | 0.77 | |
| | Natural Gas (trillion Btu) | | | | | 2.00 | |
| | Petroleum - Distillate Fuel (trillion Btu) | | | | | | |
| | Coal (trillion Btu) | | | | | 0.51 | |
| | Total (trillion Btu) | 0.543 | 1.10 | 51% | 1.086 | 5.14 | 79% |

EP 2 777 837 B1

FIG. 11

**FIG. 12**

**FIG. 13**

**FIG. 14**

1500

1505

1510

1515

1520

FIG. 15

**EP 2 777 837 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5284428 A
- GB 2083770 A
- EP 0363667 A